(19) Europäisches Patentamt
European Patent Office
Office européen des brevets

(11) **EP 0 910 534 B1**

(12) **EUROPÄISCHE PATENTSCHRIFT**

(45) Veröffentlichungstag und Bekanntmachung des Hinweises auf die Patenterteilung:
**26.09.2001 Patentblatt 2001/39**

(21) Anmeldenummer: **97931782.3**

(22) Anmeldetag: **05.07.1997**

(51) Int Cl.$^7$: **B64C 27/72**

(86) Internationale Anmeldenummer:
**PCT/EP97/03556**

(87) Internationale Veröffentlichungsnummer:
**WO 98/02349 (22.01.1998 Gazette 1998/03)**

(54) **HUBSCHRAUBERROTORBLÄTTERSTEUERUNGSVORRICHTUNG**

HELICOPTER ROTOR BLADE CONTROL DEVICE

DISPOSITIF DE COMMANDE DES PALES DE ROTOR D'UN HELICOPTERE

(84) Benannte Vertragsstaaten:
**DE FR GB IT**

(30) Priorität: **11.07.1996 DE 19627869**

(43) Veröffentlichungstag der Anmeldung:
**28.04.1999 Patentblatt 1999/17**

(73) Patentinhaber: **ZF Luftfahrttechnik GmbH**
**34379 Calden (DE)**

(72) Erfinder:
• **BLAAS, Achim**
**D-34130 Kassel (DE)**
• **PLATZER, Michael**
**D-34302 Ellenberg (DE)**
• **GÖTTE, Hans-Jürgen**
**D-34246 Vellmar (DE)**

(74) Vertreter: **Zietlow, Karl-Peter**
**ZF FRIEDRICHSHAFEN AG**
**88038 Friedrichshafen (DE)**

(56) Entgegenhaltungen:
**EP-A- 0 729 883        FR-A- 2 607 465**

• **P. RICHTER AND H-D EISBRECHER: "Design and First Test of Individual Blade Control Actuators " 16TH EUROPEAN ROTORCRAFT FORUM, Bd. 2, 18. - 20.September 1990, GLASGOW, Seiten III.6.3.1-III.6.3.9, XP002044595 in der Anmeldung erwähnt**
• **RICHTER P ET AL: "FULL SCALE WIND TUNNEL INVESTIGATION OF AN INDIVIDUAL BLADE CONTROL SYSTEM FOR THE BO 105 HINGELESS ROTOR" PROCEEDINGS OF THE EUROPEAN ROTORCRAFT FORUM, CERNOBBIO, SEPT. 14 - 16, 1993, Bd. 2, 14.September 1993, ASSOCIAZONE ITALIANA DI AERONAUTICA ED ASTRONAUTICA, Seiten G5-00-G5-12, XP000453880**
• **FRIEDMANN P P ET AL: "VIBRATION REDUCTION IN ROTORCRAFT USING ACTIVE CONTROL: A COMPARISON OF VARIOUS APPROACHES" JOURNAL OF GUIDANCE AND CONTROL AND DYNAMICS, Bd. 18, Nr. 4, 1.Juli 1995, Seiten 664-673, XP000558502**
• **FRIEDMANN P P ET AL: "VIBRATION REDUCTION IN ROTORCRAFT USING ACTIVE CONTROL: A COMPARISON OF VARIOUS APPROACHES" JOURNAL OF GUIDANCE AND CONTROL AND DYNAMICS, Bd. 18, Nr. 4, 1.Juli 1995, Seiten 664-673, XP000558502, siehe Seite 664, letzter Absatz - Seite 665, Absatz 1, siehe Seite 667, rechte Spalte, Absatz 4 - Seite 668, linke Spalte, Absatz 1**

**Beschreibung**

Die Erfindung betrifft einen Hubschrauber mit den Merkmalen nach dem Oberbegriff von Anspruch 1.

Das Kernstück eines Hubschraubers ist sein Hauptrotor. Ein oder mehrere Triebwerke treiben den Hauptrotor über ein Getriebe und einen Hauptrotormast an, der im Gehäuse des Getriebes drehbar gelagert ist und an dem der Rotorkopf befestigt ist.

Der Hauptrotor sorgt mit seinen zwei und mehr Rotorblättern, die an einem Rotorkopf angelenkt und um ihre Längsachse drehbar gelagert sind, nicht nur für den Auftrieb, sondern auch für den Vortrieb. Um einen Auftrieb zu erzeugen, werden die Rotorblätter kollektiv, d. h. synchron um einen Winkel zur Rotationsebene angestellt. Einen Vortrieb erzielt man durch eine zyklische Ansteuerung, d. h. der Einstellwinkel eines Rotorblatts durchläuft während einer Umdrehung des Rotormastes ein Maximum und ein Minimum. Die Lage der Extremwerte bestimmt die Flugrichtung.

Der Hubschrauberpilot steuert die Rotorblätter über eine Taumelscheibe an, die den Hauptrotormast umfaßt. Sie besteht aus einem stationären Teil, der über eine sogenannte Schere drehfest, aber axial verschiebbar sowie zum Rotormast in alle Richtungen kippbar am Gehäuse eines Getriebes befestigt ist, und einem drehbaren Teil, der über Radial- und Axiallager gegenüber dem stationären Teil drehbar gelagert ist. Der drehbare Teil bewegt sich mit dem stationären Teil in axialer Richtung und macht ebenfalls die Kippbewegungen mit. Er ist über eine weitere Schere am Rotorkopf befestigt.

Die Bewegung der Taumelscheibe wird über einen Hebelmechanismus auf Rotorblattaufnahmen am Rotorkopf übertragen, und zwar meistens in der Weise, daß sich der Einstellwinkel eines Rotorblatts mit der Annäherung der Taumelscheibe an den Rotorkopf vergrößert.

Der Hubschrauberpilot verstellt für die Flugmanöver die Taumelscheibe über einen weiteren Hebelmechanismus. Parallel zu diesem sind häufig hydraulische Servomotoren angeordnet, die zum einen die Ansteuerung erleichtern und zum anderen eine überlagerte Regelung ermöglichen, die auftretenden Rotorblattschwingungen entgegenwirkt.

Die nutzbare Höchstgeschwindigkeit von Hubschraubern wird durch rotorinduzierte Schwingungen sowie durch den Wirkungsgrad des vorwärts fliegenden Hauptrotors begrenzt. Schwingungen und Wirkungsgrad sind bedingt durch nicht optimale Einstellwinkel der Rotorblätter bezüglich der momentanen Richtung und Geschwindigkeit der Anströmung und des dynamischen Verhaltens. Um diesen Effekten entgegenzuwirken, ist es vorteilhaft, den Blatteinstellwinkel flexibler zu steuern. Flattern infolge abgerissener Strömung an den Rotorblättern kann z. B. durch Störunterdrückungsregler mit Hilfe von Bandfiltern für die erste Torsionseigenfrequenz der Rotorblätter kontrolliert werden. Dadurch werden Lärm und Vibrationen verringert und der Wirkungsgrad sowie die Wirtschaftlichkeit verbessert. Ferner sinkt die Arbeitsbelastung des Piloten.

Es sind grundsätzlich zwei aktive Steuerungssysteme bekannt (Papier -Nr. II.6.3.1, Sixteenth European Rotokraft Forum, 18 - 21. Sept. 1990, Glasgow "Entwicklung und erste Tests von Aktuatoren für eine Einzelblattsteuerung" Peter Richter, Hans-Dieter Eisbrecher, Valentin Klöppel), nämlich die höherharmonische Steuerung, die der Steuerung der Taumelscheibe überlagert ist und deren Stellglieder unterhalb der Taumelscheibe im hubschrauberfesten System angeordnet sind, und die Einzelblattsteuerung, bei der jedem Rotorblatt ein Stellglied im drehenden System zwischen dem drehbaren Teil der Taumelscheibe und den Rotorblattaufnahmen zugeordnet ist.

Bei der höherharmonischen Steuerung werden höherfrequente Blattwinkeländerungen durch Stellglieder im hubschrauberfesten System über die Taumelscheibe auf die Rotorblätter übertragen. Aus Geometriegründen können damit nur bestimmte Frequenzen übertragen werden, nämlich die sogenannten Blattzahlharmonischen und die unmittelbar benachbarten Frequenzen, bei einem Vierblattrotor also die vierte, dritte und fünfte, die achte, siebte und neunte usw. Harmonische der Rotordrehfrequenz, nicht aber die zweite, sechste oder zehnte Harmonische. Für Rotoren mit mehr als vier Blättern gilt entsprechendes.

Bei der Einzelblattsteuerung gibt es bezüglich der Frequenzen und Signalform keine Einschränkungen, jedoch ist der Bauaufwand für die Stellglieder im drehenden System wegen der zusätzlichen Fliehkraftbelastungen und der Energie- und Signalübertragung von dem hubschrauberfesten System auf das rotierende System erheblich größer. Ferner bringt die Fähigkeit, jedes Stellglied individuell anzusteuern, die Gefahr mit sich, daß sich die Rotorblätter im Falle einer Fehlfunktion des Regelungssystems willkürlich bewegen, was die Sicherheit beeinträchtigt.

Der Erfindung liegt die Aufgabe zugrunde, bei einem Hubschrauber der eingangs genannten Art eine individuelle Ansteuerung der Rotorblätter mit geringem Gewicht und Bauaufwand sowie einen guten Wirkungsgrad zu schaffen

Sie wird gemäß der Erfindung durch die Merkmale des Anspruchs 1 gelöst.

Bei dem erfindungsgemäßen Hubschrauber werden zu einer höherharmonischen Rotorblattsteuerung zusätzliche Stellglieder im rotierenden System zwischen der Taumelscheibe und den Rotorblattaufnahmen angeordnet, und zwar nur für Rotorblattaufnahmen, die über die Anzahl von drei hinausgehen. Damit können die von der höherharmonischen Steuerung nicht beherrschbaren Frequenzen und Signalformen erfaßt werden. Gleichzeitig wird der Bauaufwand gering gehalten, da nur relativ wenige Stellglieder zusätzlich erforderlich sind. Mit der geringeren Anzahl der Stellglieder wird ebenfalls das Gewicht entsprechend reduziert.

Ferner vereinfacht sich die Ansteuerung, da nur noch ein Bruchteil der Stellenergie und der Steuersignale von dem hubschrauberfesten System auf das rotierende System übertragen werden muß. Wenn die Ansteuerung der Einzelblätter durch die zusätzlichen hydraulischen Stellglieder gestört oder ausgefallen sein sollte, kann sie abgestellt oder überbrückt werden, ohne die Sicherheit des Hubschraubers zu gefährden, da zum Fliegen mit eingeschränktem Komfort und Wirkungsgrad das konventionelle Steuerungssystem ausreicht.

Die Sicherheit kann noch weiter gesteigert werden, wenn die Autorität der Einzelblattsteuerung begrenzt ist, d. h. daß ihr Stellanteil am gesamten Stellbereich nur einen begrenzten Teil ausmacht, z. B. weniger als 8 Grad.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

In der Zeichnung ist ein Ausführungsbeispiel der Erfindung dargestellt.
Es zeigt:

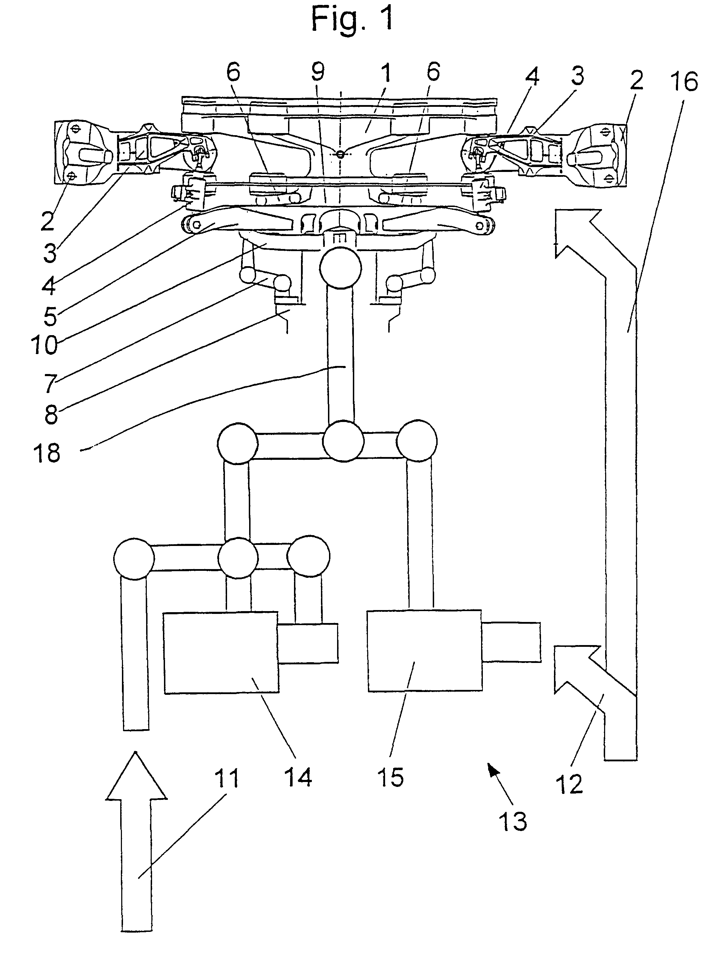

Fig. 1      eine Teilansicht eines Hubschrauberantriebes und

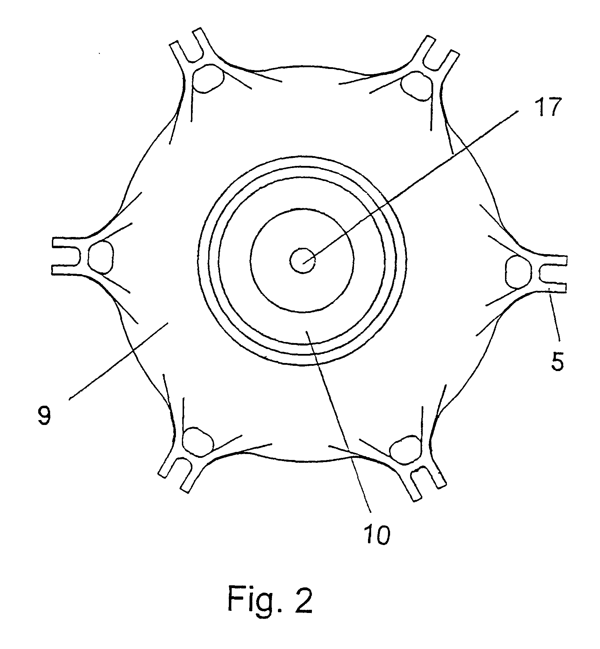

Fig. 2      einen drehbaren Teil einer Taumelscheibe.

Mit 1 ist ein Rotorkopf eines Hauptrotors eines Hubschraubers bezeichnet, an dem nicht näher dargestellte Rotorblätter jeweils über eine Rotorblattaufnahme 2 angelenkt sind. Diese hat einen Steuerhebel 3, mit dem sie zusammen mit dem Rotorblatt um dessen Längsachse anstellbar ist.

Der dargestellte Hubschrauber besitzt sechs Rotorblattaufnahmen 2, von denen zwei diametral gegenüberliegende gezeichnet sind. Diese gehören zu insgesamt dreien, die über beispielsweise hydraulische Stellglieder 4 einzeln angesteuert werden können, während die übrigen drei nur über eine Taumelscheibe mit einem drehbaren Teil 9 und einem stationären Teil 10 angesteuert werden.

An dem Steuerhebel 3 greift über ein Gelenk das hydraulische Stellglied 4 bzw. ein nicht dargestellter Lenker an. Mit ihren freien Enden sind sie an Armen 5 des drehbaren Teils 9 der Taumelscheibe angelenkt. Der drehbare Teil 9 ist gegenüber dem stationären Teil 10 der Taumelscheibe durch Axial- und Radiallager gelagert. Dichtungen dichten den Bereich der Axial- und Radiallager nach außen ab.

Eine oder mehrere sogenannte Scheren 7 halten den stationären Teil 10 der Taumelscheibe an einem Gehäuse 8 eines Getriebes fest, lassen es aber zu, daß die Taumelscheibe axial verschoben und in alle Richtungen zum Hauptrotormast 17 kippbar ist. Über eine weitere Schere 6 wird der drehbare Teil 9 vom Rotorkopf 1 zur Rotation mitgenommen.

Wird die Taumelscheibe axial verschoben, so wird die Bewegung durch den Arm 5, die hydraulischen Stellglieder 4 bzw. die Lenker und die Steuerhebel 3 in eine Blattwinkelverstellung umgesetzt und alle Rotorblätter werden in ihren Einstellwinkeln kollektiv verstellt. Wird dagegen die Taumelscheibe gekippt, durchläuft der Einstellwinkel eines jeden Rotorblatts während einer Rotorumdrehung ein Maximum und ein Minimum. Man nennt dies eine zyklische Ansteuerung, die Flugrichtung und Fluggeschwindigkeit bestimmt.

Drei Steller 18, die auf den Umfang verteilt sind, verstellen die Taumelscheibe. Sie werden angesteuert von einer Hubschraubersteuerung 13 mit einem Eingang 11, über den ein Pilot die Taumelscheibe verstellt. Dem Eingang überlagert ist eine Servoeinrichtung 14, die die Handkraft des Piloten unterstützt. Ferner ist eine höherharmonische Steuerung 15 vorgesehen. Über einen elektronischen Eingang 12 erhält sie von einem Computer Signale, in Abhängigkeit von denen höherfrequente Schwingungen, die sogenannten Blattzahlharmonischen, erzeugt werden, die über die Taumelscheibe den rotorinduzierten Schwingungen entgegenwirken.

Die durch die höherharmonische Steuerung 14 nicht erfaßten, rotorinduzierten Schwingungen werden durch die zusätzlichen Stellglieder 4 im rotierenden System bekämpft, die über eine Signalleitung 16 für eine Einzelblattsteuerung angesteuert werden. Somit können alle in Frage kommenden Frequenzen und Signalformen mit geringem Aufwand beherrscht werden

Bei einem Hauptrotor mit vier Rotorblättern ergeben sich drei Steller 18 im hubschrauberfesten System und ein zusätzliches hydraulisches Stellglied 4 im rotierenden System.

Dabei ergibt sich zwischen den Eingangssteuergrößen (Kollektivsteuerwinkel, Sinus- oder Längssteuerwinkel, Kosinus- oder Quersteuerwinkel und individueller Steuerwinkel) und dem Einstellwinkel der Rotorblätter folgende Beziehung:

$\omega t$      Rotorumlaufwinkel

$\Theta\_o$      Kollektivsteuerwinkel

$\Theta\_s$      Sinus-Steuerwinkel

$\Theta\_c$      Kosinus-Steuerwinkel

$\Theta\_ibc$      individueller Steuerwinkel

$\Theta 1$      Einstellwinkel für das Rotorblatt 1

$\Theta 2$      Einstellwinkel für das Rotorblatt 2

$\Theta 3$      Einstellwinkel für das Rotorblatt 3

$\Theta 4$      Einstellwinkel für das Rotorblatt 4

$$\Theta 1 = \Theta\_o + \Theta\_s \sin(\omega t) + \Theta\_c \cdot \cos(\omega t)$$

$$\Theta 2 = \Theta\_o + \Theta\_s \sin(\omega t - \pi/2) + \Theta\_c \cdot \cos(\omega t - \pi/2)$$

$$\Theta 3 = \Theta\_o + \Theta\_s \sin(\omega t - \pi) + \Theta\_c \cdot \cos(\omega t - \pi)$$

$$\Theta 4 = \Theta\_o + \Theta\_s \sin(\omega t - 3\pi/2) +$$

$$\Theta\_c \cdot \cos(\omega t - 3\pi/2) + \Theta\_ibc$$

Die Gleichungen lassen sich auch nach den Steuerwinkeln auflösen, so daß sich für jede Kombination von Einstellwinkeln der Rotorblätter die erforderlichen Steuerwinkel ergeben. Das Prinzip ist auch für Hauptrotoren mit mehr als vier Blättern anwendbar.

Bezugszeichen

1      Rotorkopf
2      Rotorblattbaufnahme
3      Steuerhebel
4      Stellglied im rotierenden System
5      Arm
6      Schere
7      Schere
8      Gehäuse
9      drehbarer Teil
10     stationärer Teil
11     Eingang oder Steuereingang
12     elektronischer Eingang
13     Hubschraubersteuerung
14     Servoeinrichtung
15     höherharmonische Steuerung
16     Signalleitung
17     Hauptrotormast
18     Steller

**Patentansprüche**

1. Hubschrauber mit folgenden Merkmalen:

- ein Rotorkopf (1) ist an einem Hauptrotormast (17) befestigt, der in einem Gehäuse (8) eines Getriebes drehbar gelagert ist;
- eine oder mehrere Triebwerke treiben den Hauptrotormast (17) über das Getriebe an;
- eine Taumelscheibe umfaßt den Hauptrotormast (17) und ist mit ihrem stationären Teil (10) drehfest, aber axial verschiebbar und zur Achse des Hauptrotormastes (17) in allen Richtungen kippbar gelagert;
- ein drehbarer Teil (9) der Taumelscheibe ist gegenüber dem stationären Teil (10) der Taumelscheibe über Axial- und Radiallager drehbar gelagert und am Rotorkopf (1) mittels Scheren (6) drehfest angelenkt;
- der Rotorkopf (1) trägt an seinem Umfang mehr als drei Rotorblattaufnahmen (2), die um die Längsachse der Rotorblätter mittels Steuerhebel (3) anstellbar sind, die gelenkig mit dem drehbaren Teil (9) der Taumelscheibe verbunden sind;
- die Taumelscheibe wird von drei auf den Umfang verteilten Stellgliedern (18) betätigt, die von einer Hubschraubersteuerung (13) mit einem Eingang (11) und einem elektronischen Eingang (12) angesteuert werden,

**dadurch gekennzeichnet, daß** zwischen dem drehbaren Teil (9) der Taumelscheibe und nur den Rotorblattaufnahmen (2), die über die Anzahl von drei hinausgehen, Stellglieder (4) angeordnet sind, die elektronisch angesteuert werden.

2. Hubschrauber nach Anspruch 1, dadurch g e**kennzeichnet,** daß die Stellglieder (4) möglichst gleichmäßig auf dem Umfang verteilt sind.

3. Hubschrauber nach Anspruch 2, dadurch g e**kennzeichnet,** daß die Stellglieder (4) einen maximalen Einstellwinkelbereich von weniger als 8 Grad erzeugen.

4. Hubschrauber nach den Ansprüchen 2 und 3, **dadurch gekennzeichnet, daß** die Stellglieder (4) hydraulische Stellglieder sind.

**Claims**

1. Helicopter having the following features:

- a rotor head (1) is fastened to a main rotor mast (17), which is rotatably mounted in a housing (8) of a transmission;

- one or more driving mechanism(s) drive(s) the main rotor mast (17) via the transmission;

- a swash plate comprises the main rotor mast (17) and is mounted by way of its stationary part (10) such that it is non-rotatable, yet axially displaceable and tiltable in all directions relative to the axis of the main rotor mast (17);

- a rotatable part (9) of the swash plate is mounted via thrust and radial bearings so as to be rotatable with respect to the stationary part (10) of the swash plate and is non-rotatably hinged to the rotor head (1) by means of a scissors mechanism (6);

- the rotor head (1) bears at its periphery more than three rotor blade mounts (2), which can be adjusted about the longitudinal axis of the rotor blades by means of control levers (3), which are flexibly connected to the rotatable part (9) of the swash plate;

- the swash plate is operated by three actuators (18), which are distributed over the periphery and triggered by a helicopter control unit (13) with one input (11) and one electronic input (12),

**characterised in that** actuators (4) which are electronically triggered are disposed between the rotatable part (9) of the swash plate and only the rotor blade mounts (2) which exceed the number of three.

**2.** Helicopter according to Claim 1, **characterised in that** the actuators (4) are distributed over the periphery as uniformly as possible.

**3.** Helicopter according to Claim 2, **characterised in that** the actuators (4) produce a maximum angle of incidence range of less than 8 degrees.

**4.** Helicopter according to Claims 2 and 3, **characterised in that** the actuators (4) are hydraulic actuators.

**Revendications**

**1.** Hélicoptère comportant les particularités suivantes :

- une tête de rotor (1) est fixée à un mât (17) de rotor principal qui est monté rotatif dans un carter (8) d'une boîte de transmission ;
- un ou plusieurs groupes propulseurs entraînent le mât (17) du rotor principal par l'intermédiaire de la boîte de transmission ;
- un plateau oscillant entoure le mât (17) du rotor principal et, par sa partie stationnaire (10), il est monté solidairement en rotation mais mobile en translation axiale par rapport au mât (17) du rotor principal et basculant dans toutes les directions par rapport à l'axe de ce dernier;
- une partie tournante (9) du plateau oscillant est montée mobile en rotation par rapport à la partie stationnaire (10) du plateau oscillant au moyen de paliers axiaux et radiaux et est articulée sur la tête de rotor (1) au moyen de ciseaux (6);
- la tête de rotor (1) comporte sur sa périphérie plus de trois logements (2) de pales de rotor qui peuvent être réglés en incidence autour de l'axe longitudinal des pales de rotor au moyen de leviers de commande (3) qui sont reliés de façon articulée à la partie tournante (9) du plateau oscillant ;
- le plateau oscillant est actionné par trois actionneurs (18) répartis sur la circonférence qui sont commandés par une commande d'hélicoptère (13) comportant une entrée (11) et une entrée électronique (12),

**caractérisé en ce que**, entre la partie tournante (9) du plateau oscillant et les seuls logements (2) de pales de rotor qui sont en supplément du nombre de trois, sont agencés des actionneurs (4) qui sont commandés électroniquement.

**2.** Hélicoptère selon la revendication 1, **caractérisé en ce que** les actionneurs (4) sont répartis aussi uniformément que possible sur la périphérie.

**3.** Hélicoptère selon la revendication 2, **caractérisé en ce que** les actionneurs (4) produisent une plage maximale d'angles de réglage de l'incidence de moins de 8 degrés.

**4.** Hélicoptère selon les revendications 2 et 3, **caractérisé en ce que** les actionneurs (4) sont des actionneurs hydrauliques.

# Fig. 1

Fig. 2